# EUROPÄISCHE PATENTSCHRIFT

(11) **EP 1 558 863 B1**
(45) Veröffentlichungstag und Bekanntmachung des Hinweises auf die Patenterteilung: **10.01.2007**
(21) Anmeldenummer: 03779833.7
(22) Anmeldetag: 03.11.2003
(51) Int. Cl.: F16H 61/02

(54) **SCHALTEINHEIT**
SWITCHING UNIT
UNITE DE CHANGEMENT DE VITESSES

(30) Priorität: 06.11.2002 DE 10251627
(43) Veröffentlichungstag der Anmeldung: 03.08.2005
(73) Patentinhaber: ZF FRIEDRICHSHAFEN AG, 88038 Friedrichshafen (DE)
(72) Erfinder: FISCHER, Dieter, 88149 Nonnenhorn (DE)
(86) Internationale Anmeldenummer: PCT/EP2003/012212
(87) Internationale Veröffentlichungsnummer: WO 2004/042259

(56) Entgegenhaltungen:
- EP-A- 0 075 657
- WO-A-03/089815
- DE-A- 4 015 285
- DE-A- 10 029 497
- DE-A- 19 717 252
- DE-A- 19 839 854
- DE-A- 19 949 745

## Beschreibung

Getriebe von größeren Nutzfahrzeugen sind in einen Hauptgetriebeteil, ein Splitgruppengetriebe und ein Bereichsgruppengetriebe aufgeteilt. Moderne Getriebe vor allem in Nutzfahrzeugen weisen dabei eine durch eine Pneumatik unterstützte Schalteinrichtung auf, die pneumatische Schaltungen im Splitgruppengetriebe und im Bereichsgruppengetriebe durchführt, während die Schaltungen im Hauptgetriebeteil manuell vom Fahrzeugführer durchgeführt werden und dabei in der ausübenden Kraft durch die Pneumatik unterstützt werden können.

Aus der DE 198 39 854 A1 ist eine Schaltvorrichtung bekannt geworden, bei der eine Servounterstützungseinrichtung die Schaltkraft des Fahrers unterstützt. Dabei soll die Zufuhr der unterstützenden Druckluft reduziert werden, beispielsweise nur dann zugelassen werden, wenn die Fahrzeugkupplung betätigt wird. Dafür sind zusätzliche Ventile erforderlich, die eine Reduzierung ermöglichen. Der Offenbarungsgehalt der DE 198 39 854 A1 soll vollinhaltlich auch Gegenstand dieser Beschreibung sein.

Aus der gattungsgemäßen DE 100 29 497 A1 ist eine elektro-pneumatische Schalteinheit für ein vielgängiges Fahrzeuggetriebe bekannt geworden, bei der mit einer Vielzahl von gesteuerten Ventilen das aus mehreren Baugruppen bestehende Getriebe geschaltet wird und gleichzeitig zur Vermeidung von Fehlfunktionen elektronisch überwacht wird. Dazu werden die Ventile von einem zentralen Fahrzeugführungsrechner angesteuert. Der Offenbarungsgehalt der DE 100 29 497 A1 soll vollinhaltlich auch Gegenstand dieser Beschreibung sein. Eine Beeinflussung der unterstützenden Kraft findet nicht statt.

Schließlich ist aus der DE 102 17 482 eine elektro-pneumatische Schalteinheit bekannt, bei der ein Wechselventil vorgesehen ist für ein Fahrzeuggetriebe, das ein manuell vom Fahrzeugführer an einem Schalthebel geschaltetes Hauptgetriebe und ein über Ventile elektro-pneumatisch geschaltetes Splitgruppengetriebe umfasst. Die Schaltungen des Splitgruppengetriebes sind manuell vom Fahrzeugführer durch Schalter an dem Schalthebel vorwählbar. Ein Sensor oder Schalter erkennt eine manuelle Betätigung der Fahrzeugkupplung durch den Fahrzeugführer und gibt dieses Signal an eine elektronischen Steuereinrichtung weiter, die dann die Ventile öffnet. Es ist ein Wechselventil vorgesehen, das mit je einer Eingangsöffnung mit einer Ausgangsleitung der Ventile verbunden ist. Die Ventile öffnen jedes Mal bei Vorliegen eines Kupplungsbetätigungssignal und zwar öffnet immer dasjenige der beiden Ventile, das bei der letzten Betätigung der Schalter für das Splitgruppengetriebe am Schalthebel vorgewählt wurde. Eine Ausgangsöffnung des Wechselventils ist über eine Pneumatikleitung mit einer pneumatischen Servounterstützungseinrichtung verbunden ist, die den Fahrzeugführer bei der manuellen Schaltung im Hauptgetriebe unterstützt. Das Wechselventil lässt nur die Luftzufuhr von einem der beiden Ventile des Splitgruppengetriebes zu der Pneumatikleitung und damit zur Servounterstützungseinrichtung zu, während die andere Anschlussleitung durch das Wechselventil abgesperrt wird. Dadurch wird verhindert, dass der angeschlossene Schaltzylinder für das Splitgruppengetriebe eine Luftzufuhr für seine beiden Schaltrichtungen erhält. Nur die Anschlussleitung und damit nur der Teil des Schaltzylinders soll Luft bekommen, der auch vorgewählt wurde, wobei nicht wichtig ist, ob die Vorwahl aktuell neu vom Fahrzeugführer vorgenommen wurde, oder bei der letzten entsprechenden Betätigung der Schalter am Schalthebel erfolgte. Für die Pneumatikleitung und damit für die Servounterstützungseinrichtung ist es gleichbedeutend welcher der beiden Seiten des Schaltzylinders Luft bekommt. Die Servounterstützungseinrichtung soll immer dann Luft bekommen, wenn gekuppelt wird. Findet beim Schaltvorgang im Hauptgetriebe keine Schaltung im Splitgruppengetriebe statt, so wird bei der Betätigung der Kupplung das gleiche Ventil wieder angesteuert, dass bereits bei der letzten Schaltung des Splitgruppengetriebes angesteuert und geschaltet wurde. Dadurch lässt dieses Ventil Luft an das Wechselventil und damit an die Servounterstützungseinrichtung durch, ohne den Schaltzylinder des Splitgruppengetriebes selbst in seiner Position zu verändern. Auch diese letztgenannte elektro-pneumatische Schalteinheit kann in ihrer Wirkungsweise zur Begrenzung des Schaltdruck auf ein bestimmtes Druckniveau noch verbessert werden.

Der Erfindung liegt die Aufgabe zugrunde, ohne großen Zusatzaufwand die Zufuhr an unterstützendem Medium einer Schalteinrichtung zu bestimmen.

Die Aufgabe wird gelöst durch eine Schalteinheit mit den Merkmalen des Anspruchs 1. Ausgestaltungen sind Gegenstand von Unteransprüchen.

Eine Schalteinheit für ein Fahrzeuggetriebe umfasst ein manuell vom Fahrzeugführer an einem Schalthebel geschaltetes Hauptgetriebeteil und eine Servounterstützungseinrichtung, die über wenigstens ein Ventil mit einem Unterstützungsmedium versorgt wird. Eine elektronische Steuereinrichtung betätigt das Ventil. Das Ventil ist ein von der elektronische Steuereinrichtung gepulst angesteuertes Magnetventil. Durch die gepulst angesteuerten Magnetventile kann die Druckmodulation in der Servounterstützungseinrichtung angepasst werden und der Druck auf ein vorbestimmtes Niveau begrenzt werden.

Das Fahrzeuggetriebe umfasst ein über Ventile pneumatisch geschaltetes Splitgruppengetriebe, dessen Schaltungen manuell vom Fahrzeugführer an dem Schalthebel vorwählbar sind. Die Ventile zur Schaltung des Gruppengetriebes sind die von der elektronischen Steuereinrichtung gepulst angesteuerten Magnetventile.

In eine Ausführungsform ist ein Wechselventil vorgesehen, das mit je einer Eingangsöffnung mit einer Ausgangsleitung der Ventile verbunden ist, und dass mit einer Ausgangsöffnung mit einer pneumatischen Servounterstützungseinrichtung verbunden ist.

In einer Ausführungsform gibt die elektronische Steuereinrichtung während jeder einzelnen Schaltung im Hauptgetriebe Taktimpulse an die Ventile ab, um die Servounterstützungseinrichtung zu aktivieren und den Druck in der Servounterstützungseinrichtung auf einen vorgegebenen Wert zu begrenzen.

In einer weiteren Ausführungsform gibt die elektronische Steuereinrichtung nur während der Schaltungen in einer vorbestimmten Schaltgasse im Hauptgetriebe Taktimpulse an die Ventile ab, um den Druck in der Servounterstützungseinrichtung auf einen vorgegebenen Wert zu begrenzen. In den anderen Schaltgassen finden dann eine volle Unterstützung durch die Servounterstützungseinrichtung statt. Dies kann bedeutend sein, wenn beispielsweise nur die in einer ersten Schaltgasse liegenden Anfahrgänge mit der Begrenzung des Drucks versehen werden sollen, während in höheren Gangstufen, die in anderen Schaltgassen liegen, eine volle Unterstützung gewünscht ist.

In noch einer weiteren Ausführungsform gibt die elektronische Steuereinrichtung nur während der Schaltung einer ganz bestimmten Gangstufe im Hauptgetriebe Taktimpulse an die Ventile ab, um den Druck in der Servounterstützungseinrichtung auf einen vorgegebenen Wert zu begrenzen. Welche Gangstufe das sein soll, kann in der Steuereinrichtung vorbestimmt werden. Damit kann erreicht werden, dass beispielsweise nur für einen ganz bestimmten Gang eine entsprechende Reduzierung erreicht wird. Zur Erkennung der eingelegten oder angewählten Gangstufe kann beispielsweise ein auf der Schaltwelle angeordneter Sensor vorgesehen sein.

Vorzugsweise ist die Schalteinheit eine elektro-pneumatische Schalteinheit, bei der Luft als Unterstützungsmedium Verwendung findet. Luft ist als Medium in größeren Fahrzeugen und insbesondere bei Nutzfahrzeugen vorhanden. Eine erfindungsgemäße Anwendung ist aber auch bei einer elektro-hydraulischen Schalteinheit möglich, bei der Hydrauliköl als Medium Verwendung finden kann. Hydraulische Schalteinrichtungen werden besonderes in mittleren Fahrzeugklassen mehr und mehr angewendet.

Die Erfindung wird anhand einer Zeichnung näher erläutert.

Es zeigen:
Fig. 1 eine schematische Darstellung mit Anordnung des Getriebes;
Fig. 2 einen typischen Schaltgriff mit Schaltbild;
Fig. 3 eine Ausgestaltung der Schalteinheit mit direkter Luftzufuhr

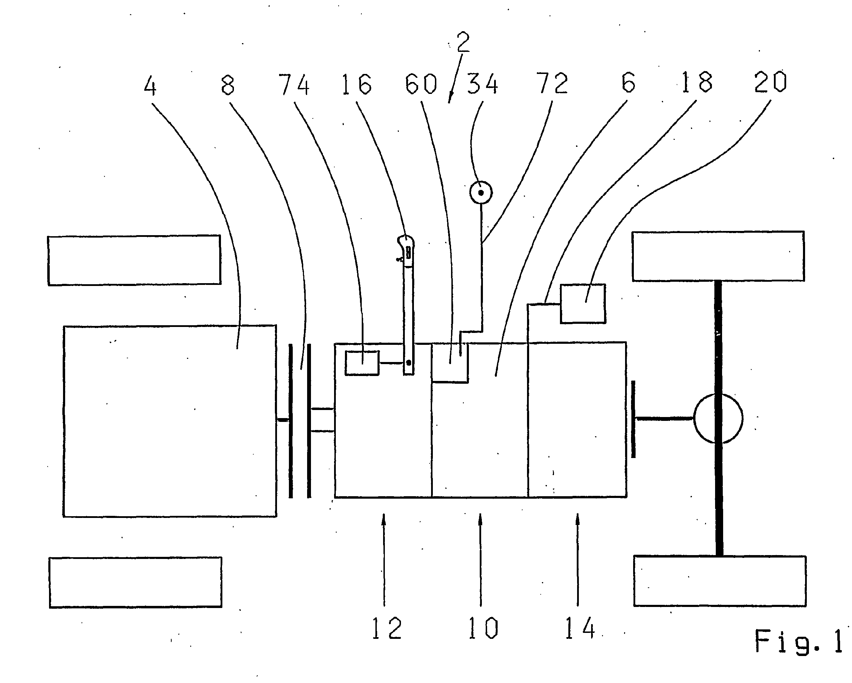

Die Fig. 1 zeigt ein Fahrzeug 2 mit einer Antriebsmaschine 4, einem Getriebe 6 und einer dazwischen angeordnete Kupplung 8. Das Getriebe 6 weist einen Hauptgetriebeteil 10, ein Splitgruppengetriebe 12 und ein Bereichsgruppengetriebe 14 auf. Der Hauptgetriebeteil 10 wird manuell durch den Fahrzeugführer über einen Schalthebel 16 geschaltet. Das Getriebe 6 ist über Verbindungsleitungen 18 mit einer elektronischen Steuereinrichtung 20 verbunden. Über eine Zuleitung 72 ist ein im Gehäuse des Getriebes 6 angeordneter Ventilblock 60 mit einem Luftvorrat 34 verbunden. Eine an oder im Gehäuse monierte Servounterstützungseinrichtung 74 ist mit dem Schalthebel bzw. den von dem Schalthebel betätigten Elementen im Hauptgetriebeteil 10 wirksam verbunden.

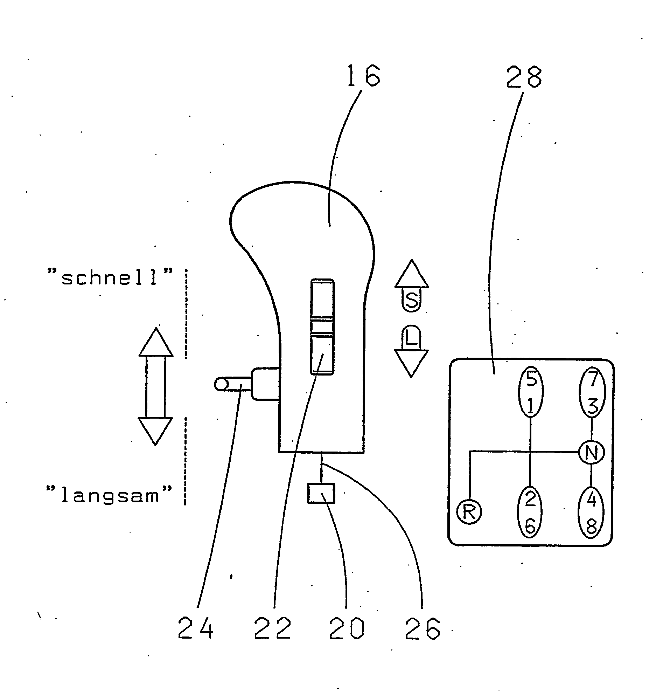

Die Fig. 2 zeigt einen beispielhaften Schalthebel 16 in einer vergrößerten Darstellung für ein Schaltbild 28, das als "Überlagertes-H" bezeichnet wird. Seitlich am Schalthebel 16 ist ein Kippschalter 22 zur Vorwahl der Schaltung des Splitgruppengetriebes 12 angeordnet. An der Vorderseite des Schalthebels 16 ist ein weiterer Kippschalter 24 vorgesehen, über den das Bereichsgruppengetriebe 14 geschaltet wird. Bei beiden Kippschaltern 22, 24 handelt es sich um elektrische Schalter, die über eine elektrische Verbindungsleitung 26 mit der Steuereinrichtung 20 verbunden sind. Bei einer Schaltung mit einem Schaltbild 28 ist in den Vorwärtsgängen jede Endstellung des Schalthebels 16 zwei Übersetzungsstufen zugeordnet, die sich jeweils um den Übersetzungssprung des Bereichsgruppengetriebes 14 unterscheiden. Bei der Kipphebelstellung "langsam" sind die Übersetzungsverhältnisse eins bis vier und der Rückwärtsgang geschaltet, bei Kipphebelstellung "schnell" sind die Gänge fünf bis acht geschaltet. Die Neutralstellung des Hauptgetriebeteils 10 ist in der Schaltgasse zwischen den Übersetzungsverhältnissen drei und vier bzw. sieben und acht angedeutet.

Den Wechsel des Bereichsgruppengetriebes 14 muss der Fahrzeugführer mittels des Kippschalters 24 am Schalthebel 16 vorwählen. Der Wechsel wird ausgeführt, sobald im Hauptgetriebeteil 10 manuell die Neutralstellung eingelegt wird.

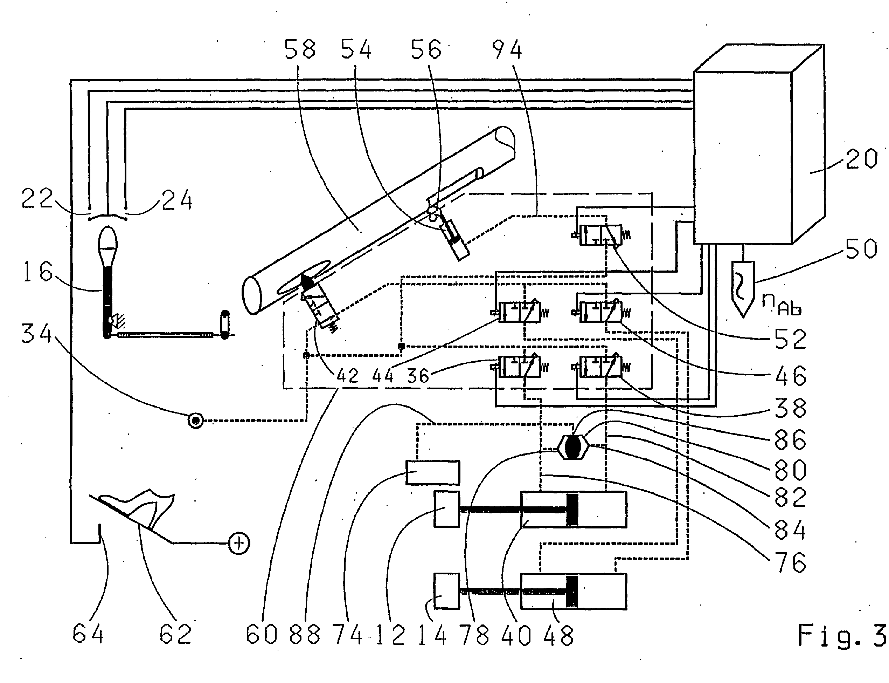

Das Splitgruppengetriebe 12 wird in den Positionen "L" oder "S" mit dem Kippschalter 22 seitlich am Schalthebel 16 vorgewählt und durch die Betätigung der Kupplung 8 geschaltet. Dazu zeigt die Fig. 3 ein Kupplungspedal 62, das einen elektrischen Schalter 64 oder einen Wegsensor betätigt, der mit der Steuereinrichtung 20 verbunden ist. Die Zulassung von Schaltungen im Splitgruppengetriebe 12 wird in dieser Anordnung von der Steuereinrichtung 20 aus bei geschlossenem Schalter 64 bestimmt, wobei an den zwei elektropneumatischen 3/2-Wege-Ventilen 36 und 38 Luft permanent ansteht. Die Ventile 36 und 38 sind gepulst angesteuerte Taktventile. Sie sind mit der elektronischen Steuereinrichtung 20 verbunden und werden in Abhängigkeit der Schalterstellung des Kippschalters 22 am Schalthebel 16 gepulst angesteuert. Bei getretenem Kupplungspedal 62 wird entweder Luft in die linke oder in die rechte Kammer des Schaltzylinders 40 des Splitgruppengetriebes 12 eingelassen, wobei dann die jeweils andere Kammer über die Ventile 36 bzw. 38 entlüftet wird.

Wie bereits ausgeführt muss der Fahrzeugführer den Wechsel des Bereichsgruppengetriebes 14 mittels des Kippschalters 24 am Schalthebel 16 vorwählen. Der Wechsel wird dann ausgeführt, sobald im Hauptgetriebeteil 10 manuell die Neutralstellung eingelegt wird. In der Neutralstellung gibt ein mechanisch an die Schaltbewegung gekoppeltes Hauptabschaltventil 42 die Luft vom Luftvorrat 34 frei zu zwei elektropneumatischen 3/2-Wege-Ventilen 44 und 46. Die Ventile 44 und 46 sind mit der elektronischen Steuereinrichtung 20 verbunden und werden in Abhängigkeit der Schalterstellung des Kippschalters 24 am Schalthebel 16 angesteuert. Bei Erkennen der Neutralstellung durch das Hauptabschaltventil 42 wird über das jeweils angesteuerte Ventil 44 oder 46 entweder Luft in die linke oder in die rechte Kammer des Schaltzylinders 48 des Bereichsgruppengetriebes 14 eingelassen, wobei dann die jeweils andere Kammer über das nicht angesteuerte Ventil 46 bzw. 44 entlüftet wird.

Um Fehlschaltungen zu vermeiden, müssen in der Schalteinrichtung zusätzliche Absicherungen getroffen werden. Dazu ist ein Gassensperrzylinder 54 vorgesehen, der vorzugsweise in der langsamen Übersetzungsstufe des Bereichsgruppengetriebes oberhalb einer bestimmten Abtriebsdrehzahl des Getriebes 6 das Schalten von der rechten Schaltgasse des Schaltbildes 28 in die linke Schaltgasse verhindert, d. h. das Schalten von der dritten oder vierten Übersetzungsstufe in die erste oder zweite Übersetzungsstufe wird verhindert. Dies soll den Fahrzeugführer davor bewahren, irrtümlich in die erste statt in die fünfte Übersetzungsstufe zu schalten, wenn er vergessen hat, mit dem Kippschalter 24 die schnelle Übersetzung in dem Bereichsgruppengetriebe vorzuwählen. In der schnellen Übersetzungsstufe des Bereichsgruppengetriebes kann die selbe Einrichtung dazu verwendet werden, Schaltungen von der achten in die fünfte Übersetzungsstufe zu verhindern. Die Abtriebsdrehzahl des Getriebes 6 wird von einem Sensor 50 erfasst und als Signal an die elektronische Steuereinrichtung 20 weitergegeben. Die Steuereinrichtung 20 gibt bei zu hoher Abtriebsdrehzahl ein Signal an ein elektropneumatisches 3/2-Wege-Ventil 52 ab, das Luft aus dem Luftvorrat 34 über die Leitung 94 zu dem Gassensperrzylinder 54 gelangen lässt, dessen Stößel über einen Umlenkhebel 56 in die Schaltwelle 58 eingreift und diese in Richtung der rechten Schaltgasse des Schaltbildes 28 drückt. Diese Anordnung ist vom Fahrzeugführer mit einem erhöhten Kraftaufwand überdrückbar und erlaubt somit in Extremsituationen das Schalten der Übersetzungsstufen in der linken Schaltgasse des Schaltbildes 28.

Eine Gruppensperre unterdrückt oberhalb einer vorgegebenen Fahrzeuggeschwindigkeit das Schalten des Bereichsgruppengetriebes 14 in die langsame Übersetzung und schützt sowohl die Synchronisierung des Bereichsgruppengetriebes 14 als auch die Synchronisierungen des Hauptgetriebeteils 10. Die Fahrzeuggeschwindigkeit wird über den Sensor 50 entsprechend der Getriebeabtriebsdrehzahl erfasst und als Signal an die Steuereinrichtung 20 weitergegeben. Die Steuereinrichtung 20 steuert in Abhängigkeit dieses Signals die Ventile 36 bzw. 38 an und lässt ein Schalten in die langsame Übersetzung nur bei Vorliegen entsprechender zulässiger Signale zu.

Die Ventile 36, 38, 42, 44, 46, 52 und 54 sind gemeinsam in dem Ventilblock 60 als einem gemeinsamen Gehäuse untergebracht, der unmittelbar an ein Gehäuse, in welchem die Schaltwelle 58 des Getriebes 6 untergebracht ist, montiert wird. Dadurch ergibt sich eine kompakte Einheit des Ventilblocks 60, der am Getriebe 6 angeordnet ist (Fig. 1). Durch die geringen Leitungslängen zwischen den einzelnen Ventilen ergeben sich vorteilhaft kurze Reaktionszeiten und Schaltzeiten. Die elektrische Verbindung zwischen ventilblock 60 und Steuereinrichtung 20 kann über einen zentralen Elektroanschluss am Ventilblock 60 erfolgen. Der Ventilblock 60 kann an ein bestehendes Getriebe angeschlossen werden, ohne dass konstruktive Änderungen des Getriebes erforderlich sind.

Vom gepulst getakteten Ventil 36 führt eine Ausgangsleitung 76 zum Schaltzylinder 40 des Splitgruppengetriebes 12 und zu einer ersten Eingangsöffnung 78 eines Wechselventils 80. Vom ebenfalls gepulst getakteten Ventil 38 führt eine Ausgangsleitung 82 zum Schaltzylinder 40 des Splitgruppengetriebes 12 und zu einer zweiten Eingangsöffnung 84 des Wechselventils 80. Erhält das Wechselventil 80 Luft von einer der Eingangsöffnungen 78 oder 84, so verschließt es die jeweils andere Eingangsöffnung 84 oder 78. Dadurch gelangt keine Luft in eine nicht gewollte Arbeitskammer des Schaltzylinders 40. Eine Ausgangsöffnung.86 des Wechselventils 80 ist mit einer Pneumatikleitung 88 verbunden, an der die Servounterstützungseinrichtung 74 angeschlossen ist. Wenn die pneumatischen Leitungen und die Durchlässe durch die Ventile ausreichend dimensioniert sind, genügt die die Pneumatikleitung 88 durchströmende Luft aus, um eine ausreichende Kraft in der Servounterstützungseinrichtung 74 zu erzeugen.

### Bezugszeichenliste:

- 2: Fahrzeug
- 4: Antriebsmaschine
- 6: Getriebe
- 8: Kupplung
- 10: Hauptgetriebeteil
- 12: Splitgruppengetriebe
- 14: Bereichsgruppengetriebe
- 16: Schalthebel
- 18: Verbindungsleitung
- 20: Steuereinrichtung
- 22: Kippschalter
- 24: Kippschalter
- 26: Verbindungsleitung
- 28: Schaltbild
- 34: Luftvorrat
- 36: Ventil
- 38: Ventil
- 40: Schaltzylinder
- 42: Hauptabschaltventil
- 44: Ventil
- 46: Ventil
- 48: Schaltzylinder
- 50: Sensor
- 52: Ventil
- 54: Gassensperrzylinder
- 56: Umlenkhebel
- 58: Schaltwelle
- 60: Ventilblock
- 62: Kupplungspedal
- 64: Schalter
- 72: Zuleitung
- 74: Servounterstützungseinrichtung
- 76: Ausgangsleitung
- 78: Eingangsöffnung
- 80: Wechselventil
- 82: Ausgangsleitung
- 84: Eingangsöffnung
- 86: Ausgangsöffnung
- 88: Pneumatikleitung
- 90: Leitung
- 92: Ventil
- 94: Leitung

## Patentansprüche

1. Schalteinheit für ein Fahrzeuggetriebe (6), das ein manuell vom Fahrzeugführer mittels eines Schalthebels (16) geschaltetes Hauptgetriebeteil (10), ein über Ventile (36, 38) pneumatisch geschaltetes Splitgruppengetriebe (12), dessen Schaltungen manuell vom Fahrzeugführer an dem Schalthebel (16) vorwählbar sind, eine Servounterstützungseinrichtung (74), die über die Ventile (36, 38) des Splitgruppengetriebes (12) mit einem Unterstützungsmedium versorgt wird, und eine elektronischen Steuereinrichtung (20) umfasst, die die Ventile (36, 38) betätigt, **dadurch gekennzeichnet, dass** die Ventile (36, 38) zur Schaltung des Splitgruppengetriebes (12) zur Anpassung der Druckmodulation in der Servounterstützungseinrichtung (74) gepulst angesteuerte Magnetventile sind.

2. Schalteinheit nach Anspruch 1, **dadurch gekennzeichnet, dass** ein Wechselventil (80) vorgesehen ist, das mit je einer Eingangsöffnung (78, 84) mit einer Ausgangsleitung (76, 82) der Ventile (36, 38) verbunden ist, und dass das Wechselventil (80) mit einer Ausgangsöffnung (86) mit der pneumatischen Servounterstützungseinrichtung (74) verbunden ist.

3. Schalteinheit nach Anspruch 1 oder 2, **dadurch gekennzeichnet, dass** die elektronische Steuereinrichtung (20) während jeder Schaltung im Hauptgetriebeteil (10) Taktimpulse an die Ventile (36, 38) abgibt, um den Druck in der Servounterstützungseinrichtung (74) auf einen vorgegebenen Wert zu begrenzen.

4. Schalteinheit nach Anspruch 1 oder 2, **dadurch gekennzeichnet, dass** die elektronische Steuereinrichtung (20) während der Schaltungen in einer vorbestimmten Schaltgasse im Hauptgetriebeteil (10) Taktimpulse an die Ventile (36, 38) abgibt, um den Druck in der Servounterstützungseinrichtung (74) auf einen vorgegebenen Wert zu begrenzen.

5. Schalteinheit nach Anspruch 1 oder 2, **dadurch gekennzeichnet, dass** die elektronische Steuereinrichtung (20) während der Schaltung einer vorbestimmten Gangstufe im Hauptgetriebeteil (10) Taktimpulse an die Ventile (36, 38) abgibt, um den Druck in der Servounterstützungseinrichtung (74) auf einen vorgegebenen Wert zu begrenzen.

6. Schalteinheit nach einem der Ansprüche 1 bis 5, **dadurch gekennzeichnet, dass** die Schalteinheit eine elektro-pneumatische Schalteinheit ist und das Unterstützungsmedium Luft ist.

7. Schalteinheit nach einem der Ansprüche 1 bis 5, **dadurch gekennzeichnet, dass** die Schalteinheit eine elektrohydraulische Schalteinheit ist.

## Claims

1. The invention relates to a switching unit for a vehicle transmission (6), with said transmission comprising a main transmission (10), which is manually shifted by the driver by means of a shift lever (16); a splitter unit (12), the shifts of which are pneumatically controlled by valves (36, 38) and can be preselected manually by the driver via the shift lever (16); a servo assistance unit (74), which is supplied with a servo assistance medium via the valves (36, 38) of the splitter unit (12) and comprises an electronic control unit (20), which operates the valves (36, 38), **characterized in that** these valves (36, 38) for the control of the splitter unit (12) for the adjustment of pressure modulation in the servo assistance unit (74) are pulse-controlled solenoid valves.

2. A switching unit according to claim 1, **characterized in that** a shuttle valve (80) is provided, each input opening (78, 84) of which is connected to an output line (76, 82) of the valves (36, 38), and that the shuttle valve (80) is connected to the pneumatic servo assistance unit (74) via one output opening (74).

3. A switching unit according to claim 1 or 2, **characterized in that** during each shift in the main transmission (10), the electronic control unit (20) sends dock pulses to the valves (36, 38) so that the pressure in the servo assistance unit (74) is kept at a specified level.

4. A switching unit according to claim 1 or 2, **characterized in that** during the shifts in a preselected shift track in the main transmission (10), the electronic control unit (20) sends clock pulses to the valves (36, 38) so that the pressure in the servo assistance unit (74) is kept at a specified level.

5. A switching unit according to claim 1 or 2, **characterized in that** during shifting of a predetermined gear in the main transmission (10), the electronic control unit (20) sends clock pulses to the valves (36, 38) so that the pressure in the servo assistance unit (74) is kept at a specified level.

6. A switching unit according to one of the claims 1 through 5, **characterized in that** the switching unit is an electropneumatic switching unit and the assistance medium is air.

7. A switching unit according to one of the claims 1 through 5, **characterized in that** the switching unit is an electrohydraulic switching unit.

## Revendications

1. Unité de commande d'une boîte de vitesses d'un véhicule automobile (6), comprenant une boîte de base (10) actionnée manuellement par le conducteur à l'aide d'un levier de changement de vitesses (16), un doubleur de gamme (12) actionné par voie pneumatique à l'aide de soupapes (36, 38), dont les changements de vitesses peuvent être présélectionnés manuellement par le conducteur à l'aide du levier de changement de vitesses (16), un dispositif d'assistance (74), alimenté à l'aide des soupapes (36, 38) du doubleur de gamme (12) avec le liquide d'assistance, et un dispositif de commande électronique (20), qui actionne les soupapes (36, 38), **caractérisée en ce que** les soupapes (36, 38) de commande du doubleur de gamme (12) pour l'adaptation de la modulation de la pression dans le dispositif d'assistance (74) sont des électrovannes commandées de façon pulsée.

2. Unité de commande selon la revendication 1, **caractérisée en ce que** est prévu une soupape à deux voies (80), étant liée respectivement avec un orifice d'entrée (78, 84) à une conduite de sortie (76, 82) des soupapes (36, 38), et **en ce que** la soupape à deux voies (80) est liée avec un orifice de sortie (86) à un dispositif d'assistance pneumatique (74).

3. Unité de commande selon une des revendications 1 ou 2, **caractérisée en ce que** le dispositif de commande électronique (20) transmet lors de chaque changement de rapport dans la boîte de base (10) des impulsions cadencées aux soupapes (36, 38), pour limiter la pression dans le dispositif d'assistance (74) à une valeur prédéfinie.

4. Unité de commande selon une des revendications 1 ou 2, **caractérisée en ce que** le dispositif de commande électronique (20) transmet lors des changements de rapports dans un couloir prédéfini dans la boîte de base (10) des impulsions cadencées aux soupapes (36, 38), pour limiter la pression dans le dispositif d'assistance (74) à une valeur prédéfinie.

5. Unité de commande selon une des revendications 1 ou 2, **caractérisée en ce que** le dispositif de commande électronique (20) transmet lors du changement d'un rapport prédéfini dans la boîte de base (10) des impulsions cadencées aux soupapes (36, 38), pour limiter la pression dans le dispositif d'assistance (74) à une valeur prédéfinie.

6. Unité de commande selon une des revendications 1 à 5, **caractérisée en ce que** l'unité de commande est une unité de commande électro-pneumatique et **en ce que** le liquide d'assistance est de l'air.

7. Unité de commande selon une des revendications 1 à 5, **caractérisée en ce que** l'unité de commande est une unité de commande électro-hydraulique.
